# EUROPÄISCHE PATENTANMELDUNG

(11) **EP 0 758 088 A2**
(43) Veröffentlichungstag der Anmeldung: **12.02.1997**
(21) Anmeldenummer: 96112440.1
(22) Anmeldetag: 01.08.1996
(51) Int. Cl.: G01P 15/12

(54) **Mikromechanischer Schalter**

(30) Priorität: 09.08.1995 DE 19529254
(71) Anmelder: TEMIC TELEFUNKEN microelectronic GmbH, 74072 Heilbronn (DE)
(72) Erfinder: Hora, Peter, 86529 Schrobenhausen (DE); Spies, Hans, 85278 Pfaffenhofen (DE)
(74) Vertreter: Maute, Hans-Jürgen, Dipl.-Ing.

(57) **Zusammenfassung**

Die Erfindung betrifft einen elektronischen Schalter mit mikromechanischem Aufbau, bestehend aus einem Feldeffekttransistor mit Drain und Source, wobei zur Ansteuerung des Feldeffekttransistors ein in einer ersten Position elastisch gehaltenes und als Gate wirkendes flächenhaftes Element beim Einwirken einer Kraft in eine zweite Position ausgelenkt wird. Als flächenhaftes Element kann eine flächenhafte Anordnung wie ein Gitter oder eine Platte oder eine andere Struktur Verwendung finden.

## Beschreibung

Die Erfindung bezieht sich auf einen Schalter mit mikromechanischem Aufbau gemäß dem Oberbegriff des Anspruchs 1.

Durch den druckschriftlich veröffentlichten **Stand der Technik** sind verschiedene mechanische Ausführungsformen solcher Schalter, die durch eine auftretende Beschleunigungskraft geschlossen oder geöffnet werden, bekannt. Alle diese als rein mechanische Schalter konzipierten und häufig unter dem Begriff "Safing-Sensoren" bekannten Systeme nutzen ausschließlich mechanische Kontakte, die durch eine auftretende Kraft, insbesondere eine Beschleunigungskraft, geschlossen oder geöffnet werden.

Solche mechanischen Schalter weisen den **Nachteil** auf, daß sie in jedem Fall ein zusätzliches Bauteil darstellen, verbunden mit Platzbedarf, Gewicht und Montageaufwand.

Ein weiterer Nachteil ist beispielsweise auch, daß solche mechanischen Schalter mit den bekanntermaßen ungenauen Schaltbedingungen und dem sog. "Prellen" der mechanischen Kontakte behaftet sind.

Ein als "PI-FET" bezeichneter mikromechanischer Beschleunigungssensor ist aus der Druckschrift "IEEE TRANSACTIONS ON ELECTRON DEVICES", VOL. ED-29, NO. 1, JANUARY 1982, Seite 27 - 33 bekannt. Die darin beschriebene Anordnung besteht aus einem mit piezoelektrischem ZnO überzogenem freitragenden Balken, der galvanisch direkt mit dem Gate eines kapazitiven p-Kanal MOS Transistors (Verarmungstyp) verbunden ist und beim Einwirken einer auf den als seismische Masse dienenden Balken äußeren Kraft, insbesondere einer Beschleunigungs- oder Verzögerungskraft, ein dadurch erzeugtes elektrisches Signal dem Gate des Transistor zuführt. Dieser bekannte Beschleunigungssensor ist jedoch technologisch aufwendig herzustellen.

Der vorliegenden Erfindung liegt die **Aufgabe** zugrunde, einen Schalter der eingangs genannten Art zu schaffen, der frei von den vorgenannten Nachteilen und in mikromechanischer weise mit einer Leistungselektronik auf Silizium einfach und kostengünstig integrierbar ist.

Diese Aufgabe wird durch die im Anspruch 1 aufgezeigten Maßnahmen **gelöst**.

Demnach besteht ein derartiger elektronischer Schalter mit mikromechanischem Aufbau aus einem Feldeffekttransistor mit Drain und Source, wobei zur Ansteuerung des Feldeffekttransistors ein in einer ersten Position elastisch gehaltenes und als Gate wirkendes flächenhaftes Element beim Einwirken einer Kraft in eine zweite Position ausgelenkt wird.

Durch diese Anordnung ist ein steuerbarer elektronischer Schalter geschaffen, der die bisherigen mechanischen und problembehafteten "Safing-Sensoren" ersetzt und nur bei Anliegen einer Spannung durch eine Steuerelektronik und zugleich durch die Einwirkung einer Beschleunigungskraft in definierter Richtung, Zeit und Größe den Schalter in einen geschlossenem Zustand versetzt.

In den Unteransprüchen sind Ausgestaltungen und Weiterbildungen angegeben. Ausführungsbeispiele sind in der nachfolgenden Beschreibung erläutert und in den Figuren der Zeichnung skizziert.

Es zeigen
- Fig. 1:: eine schematische Darstellung eines ersten Schalters mit Arbeitskontakt,
- Fig. 2:: eine schematische Darstellung eines zweiten Schalters mit Arbeitskontakt und Hilfstransistor,
- Fig. 3:: eine schematische Darstellung eines dritten Schalters mit Ruhekontakt,
- Fig. 4:: eine perspektivische, prinzipielle Darstellung des mikromechanischen Aufbaus eines Schalters für transversale Beschleunigungsempfindlichkeit,
- Fig. 5:: eine perspektivische, prinzipielle Darstellung des mikromechanischen Aufbaus eines Schalters für laterale Beschleunigungsempfindlichkeit,
- Fig. 6a:: eine perspektivische Darstellung eines mikromechanischen Schalters und
- Fig. 6b:: eine Schnittzeichnung des Schalters nach Fig. 6a.

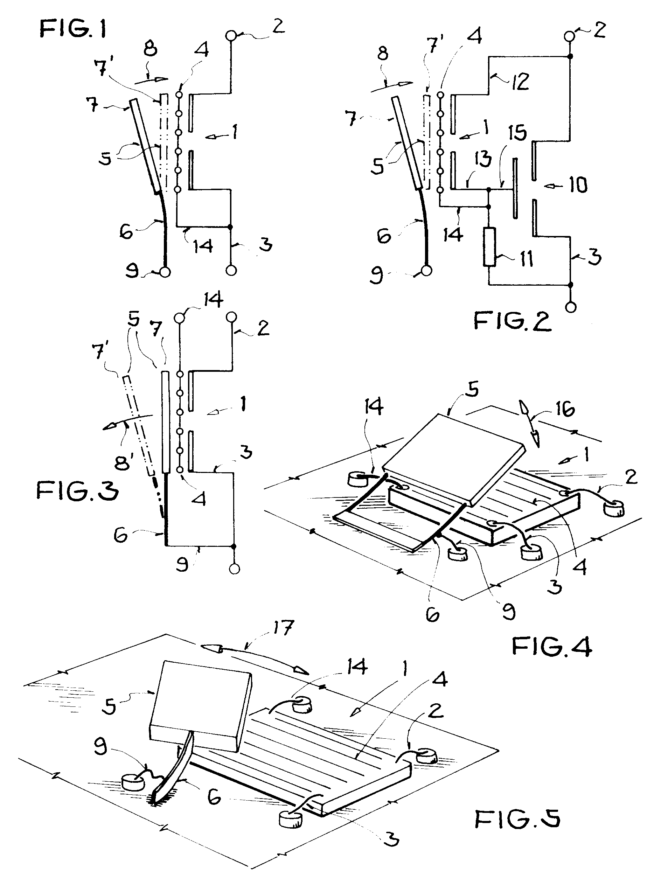

**Fig. 1** zeigt ein erstes Ausführungsbeispiel eines elektronischen Schalters. Teile des elektronischen Schalters sind ein selbstsperrender Leistungsfeldeffekt-Transistor 1 (FET, Anreicherungstyp, n-Kanal-Typ) mit Drainelektrode 2 und Sourceelektrode 3 und ein flächenhaftes Element 5. Das flächenhafte Element 5 ist vorzugsweise aus Silizium ausgeätzt; es kann aber auch aus einem anderen leitfähigen Material, z.B. aus Metall, bestehen.

Zum Herstellungsverfahren mikromechanischer Strukturen allgemein wird auf das Buch "Mikrosystemtechnik für Ingenieure" von W. Menz und P. Bley, 1993 erschienen unter ISBN 3-527-29003-6 bei VCH Verlagsgesellschaft mbH, Weinheim, verwiesen.

In der Gateregion des Feldeffekttransistors 1 ist ein leitfähiger Schirm 4 angeordnet. Er liegt auf dem Potential der Source 3 und hat die Aufgabe, den Source-Drain-Kanal vor Beschädigung durch das flächenhafte Element 5 zu schützen und zu verhindern, daß Source 3 und Drain 2 kurzgeschlossen werden. Weiterhin dient er als Schutz gegen elektrische oder magnetische Felder. Der Leistungs-Feldeffekttransistor 1 funktioniert prinzipiell auch ohne den Schirm 4; jedoch ist der Einbau einer solchen Abschirmung zweckmäßig.

Über den Schirm 4 ist in einem bestimmten Abstand flächendeckend das flächenhafte Element 5 angeordnet und beispielsweise durch eine Schweißverbindung mit einem Federelement 6 leitend verbunden. Dabei dient das Federelement 6, das aus einem beliebigen leitfähigen und federnden Material besteht, gleichzeitig als elektrischer Anschluß zu einer Elektrode 9.

Tritt nun eine Beschleunigung auf, so daß eine Kraft in Pfeilrichtung 8 wirkt, so wird das flächenhafte Element 5 aus einer ersten Position 7 in eine gestrichelt eingezeichnete Position 7' bewegt. Ist an die Elektrode 9 des flächenhaften Elements 5 eine positive Steuerspannung von 5 bis 20 V angelegt, so wird der Feldeffekttransistor 1 durchgesteuert und ein zwischen Drainelektrode 2 und Sourceelektrode 3 angeschlossener Stromkreis, etwa zur Auslösung eines Insassenschutzsystems, geschlossen.

**Fig. 2** zeigt ein zweites Ausführungsbeispiel eines elektronischen Schalters. Die Anordnung ist der in Fig. 1 gezeigten ähnlich; lediglich wird einem Feldeffekttransistor 10 ein Widerstand 11 und ein Hilfstransistor 1 entsprechend Fig. 1 mit Drainelektrode 12 und Sourceelektrode 13 zugeordnet. Dabei ist die Sourceelektrode 13 des Hilfstransistors 1 mit der Gateelektrode 15, seine Drainelektrode 12 mit der Drainelektrode 2 des Feldeffekttransistors 10 verbunden.

Der Unterschied zwischen dieser Ausführungsform und der in Fig. 1 gezeigten besteht darin, daß nicht der gesamte zwischen den Elektroden 2 und 3 fließende Strom mittels des flächenhaften Elements 5 direkt geschaltet, sondern nur derjenige Teil, der über den Widerstand 11 und durch den Hilfstransistor 1 fließt und dessen Größe durch den Widerstand 11 eingestellt wird.

Bewegt eine Beschleunigungskraft in Pfeilrichtung 8 das flächenhafte Element 5 aus der ersten Position 7 in die gestrichelt eingezeichnete Position 7', wird der Hilfstransistor 1 durchgesteuert. Das hat zur Folge, daß das Gate 15 des Feldeffekttransistors 10 annähernd auf dem elektrischen Potential der Drain 2 liegt und somit der Feldeffekttransistor 10 durchgesteuert wird.

Dadurch kann der Hauptteil des Stromes zwischen Drain 2 und Source 3 fließen, wodurch beispielsweise wiederum eine Schutzeinrichtung ausgelöst wird. Zur Erhöhung der Steilheit kann der Feldeffekttransistor 10 in diesem Fall vorteilhaft als Doppel-FET ausgelegt werden.

**Fig. 3** zeigt ein weiteres Ausführungsbeispiel, dessen Anordnung sich von der in Fig. 1 und 2 gezeigten darin unterscheidet, daß das flächenhafte Element 5 mittels seiner Elektrode 9 mit der Sourceelektrode 3 des Feldeffekttransistors 1 verbunden und in seiner ersten Position 7 parallel zum Schirm 4 angeordnet ist. Über eine Elektode 14 wird dem Schirm 4 eine Spannung zugeführt und infolgedessen ein elektrisches Feld um den Schirm 4 aufgebaut.

Dieses elektrische Feld wird dadurch kompensiert, daß vom flächenhaften Element 5 ein ungefähr gleich großes, aber entgegengesetzt gerichtetes Feld ausgeht, da das flächenhafte Element 5 auf dem Potential der Sourceelektrode 3 liegt. Solange sich das flächenhafte Element 5 in seiner ersten Position 7 befindet, ist folglich der Source-Drain-Kanal des Feldeffekttransistors 1 gesperrt.

Wenn das flächenhafte Element 5 aufgrund einer Beschleunigungskraft mit Pfeilrichtung 8' aus seiner ersten Position 7 in die gestrichelt eingezeichnete Position 7' ausgelenkt wird, entfällt die Wirkung seines elektrischen Feldes auf den Schirm 4, dessen Feld nun seinerseits den Drain-Source-Kanal des Feldeffekttransistors 1 leitend schaltet.

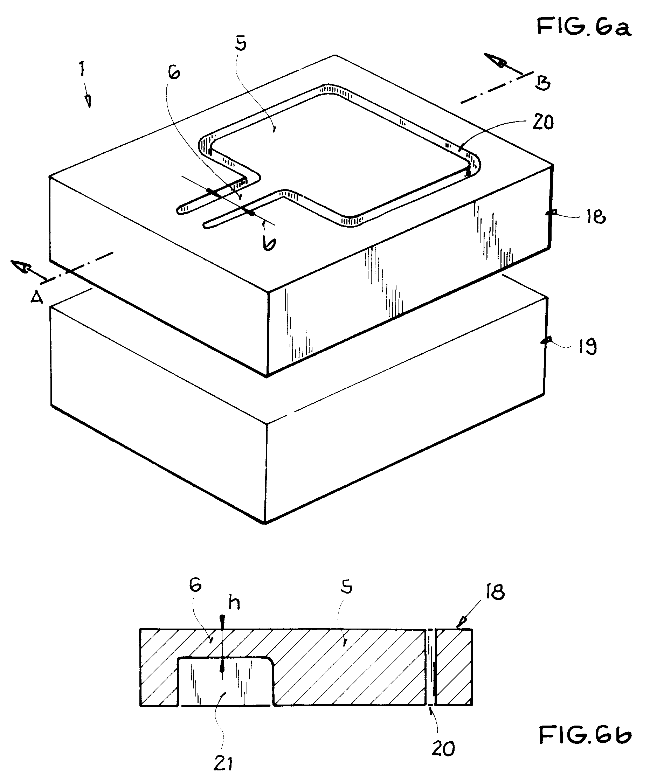

Die **Fig. 4 und 5** zeigen perspektivisch die prinzipielle Anordnung eines elektronischen Schalters, der ähnlich wie ein gewöhnlicher Feldeffekttransistor eine Fläche von 70 bis 400 µm² aufweist. Der Feldeffekttransistor 1 mit Drain 2 und Source 3 ist durch das Gitter 4 geschützt, dem mittels der Elektrode 14 eine Spannung zugeführt werden kann. Das flächenhafte Element 5, dem über die Elektrode 9 eine Spannung zugeführt werden kann, wird durch das Federelement 6 gehalten. Der in Fig. 4 gezeigte Schalter weist eine transversale Beschleunigungsempfindlichkeit auf und ist nur für solche Beschleunigungskräfte empfindlich, die in Pfeilrichtung 16 wirken. Hingegen zeigt Fig. 5 einen für laterale Beschleunigungskräfte empfindlichen Schalter, dessen flächenhaftes Element 5 sich nur in Pfeilrichtung 17 bewegen kann.

In **Fig. 6a** ist der erfindungsgemäße, aus einer ersten Halbleiterstruktur 18 und einer zweiten Halbleiterstruktur 19 bestehende Schalter perspektivisch und in **Fig. 6b** im Schnitt längs der Achse A-B dargestellt.

Die zweite Halbleiterstruktur 19 stellt hierbei den Source-Drain-Kanal, die erste Halbleiterstruktur 18 das Gate des Feldeffekttransistors 1 dar.

Mit Hilfe eines bekannten und deshalb nicht näher beschriebenen Ätzverfahrens wird in die erste Halbleiterstruktur 18 eine Grabenstruktur 20 und eine Ausnehmung 21 eingebracht und somit das flächenhafte Element 5 und das Federelement 6 erzeugt.

Der gezeigte mikromechanische Schalter weist seine Hauptempfindlichkeit für senkrecht zur Source-Drain-Ebene wirkende (Beschleunigungs-) Kräfte auf.

Um einen mikromechanischen Schalter zu erhalten, der eine Hauptempfindlichkeit für parallel zur Source-Drain-Ebene wirkende Kräfte aufweist, muß die Grabenstruktur 20 wesentlich verbreitert, die Höhe h des Federelements 6 vergrößert und seine Breite b verringert werden.

Als flächenhaftes Element 5 kann eine flächenhafte Anordnung wie ein Gitter oder eine Platte oder eine andere Struktur Verwendung finden.

Der häufig als "Safing-Sensor" bezeichnete elektronische Schalter findet seine Verwendung hauptsächlich in Kraftfahrzeugen in Verbindung mit Insassenschutzvorrichtungen, die im Falle eines Unfalls oder Aufpralls zum Schutz der Insassen ausgelöst werden müssen, wenn die auftretenden Beschleunigungskräfte bestimmte Grenzwerte überschreiten.

## Patentansprüche

1. Elektronischer Schalter mit mikromechanischem Aufbau, bestehend aus einem Feldeffekttransistor (1) mit Drain (2) und Source (3), **dadurch gekennzeichnet**, daß zur Ansteuerung des Feldeffekttransistors (1) ein in einer ersten Position (7) elastisch gehaltenes und als Gate wirkendes flächenhaftes Element (5) beim Einwirken einer Kraft in eine zweite Position (7') ausgelenkt wird.

2. Elektronischer Schalter nach Anspruch 1, **dadurch gekennzeichnet**, daß das flächenhafte Element (5) als Platte ausgebildet ist.

3. Elektronischer Schalter nach Anspruch 1, **dadurch gekennzeichnet**, daß das flächenhafte Element (5) als gitterförmige Struktur ausgebildet ist.

4. Elektronischer Schalter nach Anspruch 1 bis 3, **dadurch gekennzeichnet**, daß der Feldeffekttransistor (1) durch eine senkrecht zur Source-Drain-Ebene wirkende Kraft gesteuert wird.

5. Elektronischer Schalter nach einem der Ansprüche 1 bis 4, **dadurch gekennzeichnet**, daß der Feldeffekttransistor (1) durch eine parallel zur Source-Drain-Ebene wirkende Kraft gesteuert wird.

6. Elektronischer Schalter nach einem der Ansprüche 1 bis 5, **dadurch gekennzeichnet**, daß ein felddurchlässiger Schirm (4) zur Abschirmung gegen statische Felder in der Gateregion des Feldeffekttransistors (1) angeordnet ist.

7. Elektronischer Schalter nach einem der Ansprüche 1 bis 6, **dadurch gekennzeichnet**, daß auf das flächenhafte Element (5) eine Beschleunigungskraft wirkt.

8. Verwendung eines elektronischen Schalters gemäß eines der Ansprüche 1 bis 7 zur Ansteuerung eines Halbleiterschalters (10), insbesondere eines Feldeffekttransistors.

9. Verwendung eines elektronischen Schalters gemäß eines der Ansprüche 1 bis 7 als Beschleunigungssensor.
